# FASCICULE DE BREVET EUROPEEN

(11) **EP 3 337 289 B1**
(45) Date de publication et mention de la délivrance du brevet: **04.11.2020**
(21) Numéro de dépôt: 17206094.9
(22) Date de dépôt: 08.12.2017
(51) Int. Cl.: H04W 84/04, H04W 72/04

(54) **PROCÉDÉ ET SYSTÈME DE COMMUNICATIONS**
KOMMUNIKATIONSVERFAHREN UND -SYSTEM
COMMUNICATION METHOD AND SYSTEM

(30) Priorité: 19.12.2016 FR 1601800
(43) Date de publication de la demande: 20.06.2018
(73) Titulaire: Thales, 92400 Courbevoie (FR)
(72) Inventeur: MULTEDO, Gilbert, 92622 Gennevilliers Cedex (FR); LAMY-BERGOT, Catherine, 92622 Gennevilliers Cedex (FR); ROGIER, Jean-Luc, 92622 Gennevilliers Cedex (FR)
(74) Mandataire: Marks & Clerk France

(56) Documents cités:
- EP-A1- 2 418 892
- FR-A1- 2 998 744

## Description

L'invention concerne un procédé et un système de communications en bande haute fréquence HF, applicable aux stations d'infrastructure et aux stations mobiles (navales, terrestres, aéronautiques) qui s'y connectent. Elle concerne l'établissement de liens et l'optimisation globale des ressources de communications sur le média HF, média qui se révèle être particulièrement variable, car les conditions en mode ionosphérique varient notamment selon le cycle solaire, la saison, l'heure de la journée. Elle permet aussi la mise en œuvre de solutions large bande à haut débit qui requièrent un meilleur bilan de liaison.

Elle s'applique dans le domaine des communications hautes fréquences HF et peut être utilisée pour des utilisations en bande étroite et en large bande.

Les liens HF offrent notamment une capacité hors ligne de vue (BLOS) qui permet de réaliser des communications à longue, voire très longue distance, sans nécessiter le recours à un satellite ou à l'emploi de stations relais.

Les transmissions HF, notamment lorsque l'on cherche à traiter des distances moyennes à longues distances (classe 1000-10000 kms) s'appuient en général sur des stations d'infrastructure ou des sites dédiés dans lesquels sont déployées des antennes de grande taille et de gain élevé et, spécifiquement pour la partie « émission », des amplificateurs de forte puissance (typiquement supérieure à 1 kW). Les liaisons d'infrastructure permettent d'atteindre aujourd'hui quasiment l'ensemble du globe avec des très bas débits, par exemple 75bits/s avec une disponibilité supérieure à 90%, ceci en utilisant des amplificateurs de forte puissance entre 5 et 10 kW et des antennes à fort gain. Une station d'infrastructure comporte deux parties ou sites géographiques qui sont en général éloignés d'au moins plusieurs dizaines de kilomètres pour éviter la pollution radioélectrique des récepteurs par les émetteurs de forte puissance. Un lien de communication en général parfait et à faible latence relie les deux sites et permet un fonctionnement de type émetteur/récepteur en bi-site. Le lien de communication utilisé est, par exemple, un faisceau hertzien, une liaison spécialisée, etc. Les liaisons entre la station d'infrastructure et un mobile (ou une autre station d'infrastructure) sont alors établies :
- Soit en fréquence fixe FF, cas dans lequel l'émetteur et le récepteur ont préalablement décidé de la fréquence qu'ils utiliseraient, donc dans laquelle le récepteur écoute la fréquence (veille sur la fréquence) pour réagir lorsqu'il détecte un appel,
- Soit en prise de liaison automatique ou ALE (Automatic Link Establishment), cas pour lequel plusieurs procédures existent, standardisées ou non. Ces procédures reposent sur le fait de sauter de manière synchrone ou asynchrone entre les différentes fréquences d'un plan préétabli. Le récepteur, qui est en veille sur ce plan de fréquences préétabli, saute donc en fréquence en écoutant la fréquence instantanée pour réagir lorsqu'il détecte un appel.

Ces stations d'infrastructure établissent des liens soit avec d'autres sites d'infrastructure, soit avec des utilisateurs mobiles, par exemple un bateau, un véhicule, un aéronef, etc., ou des utilisateurs semi-mobiles, par exemple une station de commandement. L'utilisateur mobile ou semi-mobile est en général équipé d'émetteurs de faible ou de moyenne puissance, typiquement de l'ordre de 20 à 500 W, et d'antennes dont les dimensions dépendent de la taille et de l'encombrement de la plateforme ou encore de l'espace disponible. Ceci amène naturellement à une dissymétrie de la liaison entre un site d'infrastructure et un utilisateur mobile. Une fois la liaison établie, les équipements associés (antenne, amplificateur, radio, modem, etc.) sont dédiés à la communication. Un opérateur ou un système de gestion permet de les configurer dans un mode d'intérêt, pour la ou les formes d'ondes d'intérêt, et pour les fréquences d'intérêt en fonction de la planification prévue pour le fonctionnement du système. Cette approche conduit à un dimensionnement des équipements en fonction du nombre de liaisons à veiller, et aussi des types d'antennes, les antennes directives permettant d'avoir un fort gain.

Il existe actuellement un besoin d'offrir des solutions optimisées en termes de coût/surface utilisée/ facilité de déployer le système pour répondre notamment au besoin récurrent de compétitivité. D'autre part, on cherche à améliorer les performances des systèmes actuels pour améliorer la résilience des liens HF, souvent considérés comme insuffisamment fiables et longs à établir, mais aussi pour permettre la mise en œuvre de solutions large bande à haut débit qui requièrent un meilleur bilan de liaison.

L'art antérieur décrit deux types de solutions. Une première démarche repose sur l'utilisation de ressources plus puissantes et plus nombreuses et la deuxième repose sur la mise en œuvre de traitement des antennes en émission et en réception.

La première approche consiste à augmenter la puissance des amplificateurs dans les installations existantes. Ces dernières sont généralement déjà très performantes au regard de ce qui est réalisable à ce jour. La puissance disponible maximale est de l'ordre de 10 kW, les antennes sont de type log-périodique de hauteur supérieure à 10 m. Des réseaux d'antennes peuvent être utilisés en réception, ce qui permet d'avoir un gain d'antenne en réception par formation de faisceaux. Augmenter ces valeurs de puissance et de dimension suppose des investissements importants, pour des gains qui se révèlent en final proportionnellement assez faibles. Par exemple, passer à 20 kW ne permet de gagner que 3 dB.

Dans la deuxième approche, le gain d'antennes est augmenté en utilisant, par exemple, des antennes directives. L'augmentation de la directivité des antennes conduit à une augmentation du nombre de chaînes de traitement pour veiller l'ensemble des directions d'intérêt. Cette augmentation a un impact important en termes de coût d'installation et de maintenance. L'emploi d'antennes directives, telles que des antennes log-périodiques, losanges, engendre naturellement un dimensionnement des équipements en fonction du nombre de directions à veiller (typiquement, une antenne omnidirectionnelle isotrope théorique permet de veiller l'ensemble des directions, tandis qu'une antenne présentant un grand gain est sectorielle et doit donc être orientée dans la bonne direction, après que cette direction ait été déterminée, ou par défaut si l'antenne veille un secteur, qu'il s'agisse d'une antenne en émission ou en réception. En réception, il est également possible de considérer l'emploi de réseaux d'antennes, où chaque antenne élémentaire est typiquement omnidirectionnelle et à faible gain, mais où une formation de faisceau par le calcul peut être appliquée pour créer une antenne directive virtuelle. Une telle solution est typiquement employée dans des équipements de goniométrie.

Une autre façon d'aborder le problème est de définir un maillage plus important du globe pour réduire la distance à couvrir. Ceci passe par l'établissement de plusieurs stations (et donc de sites associés). Augmenter le nombre de stations d'infrastructures permet d'améliorer le rendu global du réseau de stations, mais pose le problème du coût de ces stations supplémentaires et de la faisabilité de leur installation. En effet, il est nécessaire de disposer d'espaces dédiés, ce qui peut s'avérer difficile en pleine mer, par exemple, ou loin de son territoire.

Une autre solution consiste à utiliser une antenne de réception large bande adaptée à effectuer des écoutes et une goniométrie de trafic HF permettant de détecter des émissions, avec une amélioration du gain d'antenne via une formation de faisceau. Ces solutions ne sont pas contraintes en temps réel, comme le processus de communication notamment en phase ALE peut l'être. De ce fait, les séquencements et les opérations appliqués vont généralement différer : si le réseau n'est pas formé en temps réel, le traitement temps différé avec formation de faisceau sur direction d'arrivée n'est pas impacté, alors que le traitement ALE a une latence maximale autorisée pour la réponse.

Le brevet EP2418892 décrit un procédé permettant d'établir de manière automatique un lien de communication entre un premier site en émission et un deuxième site en réception. Ce brevet décrit le fait de pouvoir coupler une radio et un contrôleur afin de pouvoir travailler sur des émissions démarrant en bande étroite puis passant en large bande. L'enseignement technique de ce brevet décrit une solution de prise de liaison large bande, où cette notion de large bande correspond à la bande utile du signal.

Malgré les résultats obtenus par les systèmes connus de l'art antérieur, ces derniers ne permettent pas d'obtenir les performances souhaitées pour des communications HF, tout en réduisant les coûts de déploiement de la solution.

L'objet de la présente invention est de proposer un procédé et un système qui s'appuient sur un traitement large bande en réception reposant sur un réseau d'antennes et l'application de formation de faisceau, et sur la gestion des ressources sur le site d'émission pour optimiser leur emploi et la qualité des liens établis, tout en respectant les priorités respectives des flux ou des requêtes d'établissement des communications.

Dans la suite de la description on définit la notion de large bande comme une bande d'écoute strictement supérieure à la bande instantanée du signal modulé maximal possible.

L'invention concerne un procédé d'établissement d'un lien de communication pour un utilisateur mobile dans un système de communications haute fréquence HF comprenant au moins un site d'émission et au moins un site de réception, les deux sites étant distants l'un de l'autre d'une distance D, les deux sites communiquant via un réseau de communication comportant au moins les étapes suivantes :
- Au niveau du site de réception, scruter les signaux ou fréquences d'intérêt fᵢₙₜ pour une communication donnée en utilisant un récepteur large bande configuré pour une bande d'écoute strictement supérieure à la bande instantanée du signal modulé maximal possible, estimer le niveau d'énergie reçue sur les fréquences scrutées par un calcul de corrélation des signaux reçus et détecter si les signaux reçus sur ledit récepteur large bande comporte une demande d'établissement d'un lien de communication contenu dans les signaux reçus sur le récepteur,
- Lorsque le signal comporte une requête d'établissement de lien de communication, alors transmettre cette demande d'établissement de lien au niveau de l'équipement émetteur et à un module de pilotage HUB qui vérifie si la requête en communication a été détectée dans un délai fixé,
- Lorsque la requête n'est pas reçue dans le délai fixé, alors le site de réception se met dans une phase d'écoute et de scrutation,
- Lorsque la requête a été détectée dans le délai fixé, le module de pilotage au niveau réception vérifie s'il est possible d'établir un lien de communication en interrogeant le site d'émission et en vérifiant que le site d'émission dispose des ressources pour établir le lien de communication demandé et démarrer le procédé de communication sur la base d'informations de configuration calculées par le site d'émission, dans le cas contraire retourner à l'étape de scrutation des signaux reçus.

Pour une demande en fréquence fixe FF, l'appel est réalisé sur une même fréquence et pour une demande d'établissement automatique de lien ou ALE, l'appel est réalisé successivement ou en parallèle sur plusieurs fréquences de valeurs différentes.

Selon un mode de réalisation, le procédé calcule la direction d'arrivée du signal et transmet cette information au site d'émission pour déterminer la configuration d'émission disponible pour une configuration donnée.

Le procédé peut comporter une étape où l'on compare la configuration calculée avec un ensemble de configurations existantes et, dans le cas où une meilleure configuration existe, alors le module de pilotage HUB transmet les nouveaux paramètres de configuration pour le ou les processus de communication aux équipements pilotés (amplificateur, matrice, ...).

Le procédé analyse, par exemple, le contenu de la demande de communication et en fonction de la priorité de la communication, il libère des ressources utilisées par une communication en cours pour les réaffecter à cette nouvelle communication.

Sur réception d'une demande de communication, le procédé suspend une communication en cours pour transmettre une information d'attente à la nouvelle communication.

L'invention concerne aussi un système de communication Haute Fréquence ou HF comportant au moins un site d'émission et un site de réception, les deux sites étant séparés d'une distance D choisie pour éviter les perturbations du site d'émission sur le site de réception caractérisé en ce que :
- Le site d'émission comprend au moins plusieurs émetteurs reliés à un ensemble d'antennes émettrices et un module de pilotage HF,
- Le site de réception comporte un récepteur large bande et un module de pilotage HF,
- Lesdits modules de pilotage HF au niveau site d'émission et au niveau du site de réception étant adaptés à exécuter les étapes du procédé selon l'invention.

D'autres caractéristiques et avantages de l'invention apparaîtront mieux à la lecture de la description détaillée qui suit donnée à titre illustratif et nullement limitatif, et qui est faite en référence aux dessins annexés dans lesquels :
- La figure 1, schématise un exemple global de système dans lequel l'invention peut être utilisée,
- La figure 2, est un exemple d'architecture selon l'invention,
- La figure 3, illustre les étapes d'initialisation des différents éléments participant à l'invention, et
- La figure 4, illustre les étapes mises en œuvre par le procédé selon l'invention.

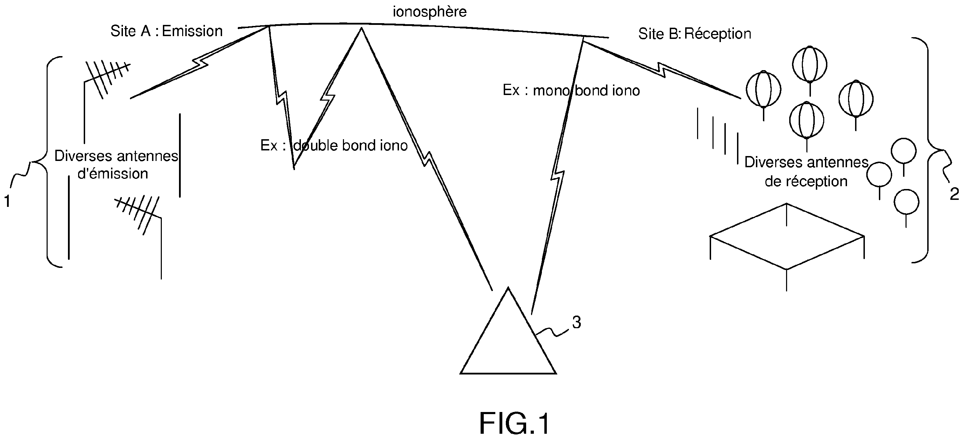

La figure 1 est un schéma global illustrant la position d'un site d'émission 1 distant d'un site de réception 2 et d'un utilisateur mobile ou navire 3 souhaitant établir une communication. Le site d'émission et le site de réception sont disposés à une distance D choisie de façon à éviter toute perturbation radioélectrique d'un site sur l'autre et les deux sites communiquent via un réseau de type ligne spécialisée ou LS, réseau étendu WAN (Wide Area Network) ou faisceaux Hertziens FH.

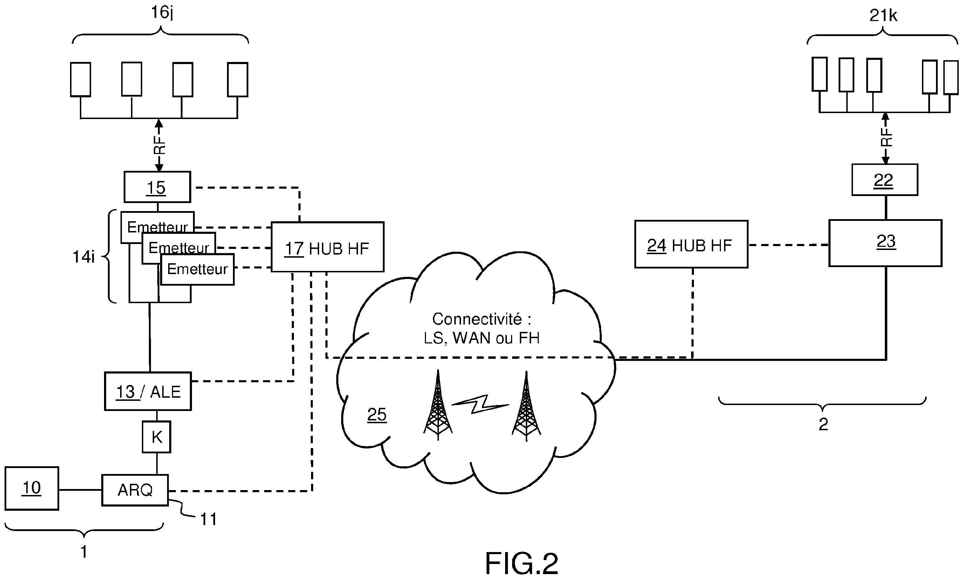

La figure 2 illustre un exemple d'architecture système selon l'invention comprenant le site d'émission 1 et le site de réception 2.

Le procédé permet de veiller l'ensemble des fréquences d'intérêt au moyen d'antennes en réseau et d'un récepteur large bande, capables de former des faisceaux pour le calcul et de traiter en parallèle un nombre de liaisons supérieures au nombre maximal de liaisons prévu pour la station.

Le site d'émission 1, comporte par exemple un poste opérateur 10, en liaison avec un module 11 adapté à gérer la fiabilisation des liaisons, un module de cryptographie 12 des données à transmettre. Les données chiffrées sont transmises à un modulateur/ démodulateur ou modem 13 ayant une sortie reliée à plusieurs émetteurs 14i reliés à une matrice de commutation 15 d'un ensemble de n antennes émettrices 16j. Le modem 13 réalise les fonctions de modulation pour le trafic et la gestion du lien ALE. Le site d'émission comporte aussi un module de pilotage HUB HF 17. Le module de pilotage est relié au modem 13, à l'émetteur, à la matrice de commutation 15 et optionnellement au module de fiabilisation 11 pour les piloter en fonction de ses stratégies de communications, notamment en fonction des requêtes d'établissement de communication qu'il reçoit.

Côté émission, un processus multicritère d'optimisation de l'emploi des ressources, tenant compte des capacités des équipements, de la qualité des liaisons et des priorités des différents flux, optimise les choix des ressources pour chaque liaison. Le système gère, via le module de pilotage HUB, les ressources de façon optimisée en fonction :
- d'une part de la capacité des ressources (par exemple une antenne TX ne fonctionnant qu'au-dessus de 6MHz sera non éligible à une transmission à fi=4.5 MHz ; par exemple une antenne TX ne supportant pas 10kW non éligible pour être utilisée avec un amplificateur de puissance de 10kW non bridable ; par exemple une antenne directive ne pouvant pointer sur le secteur de la communication choisie ne pourra être sélectionnée, etc.), et
- d'autre part, en fonction des priorités et de la qualité de service QoS (au sens besoins en débit, qualité) opérationnelles. Typiquement, lorsque des compromis devront être faits et lorsqu'une seule communication est possible, c'est la communication de priorité la plus élevée qui sera favorisée.

Le site de réception 2 comporte plusieurs antennes 21k large bande connectées à un multiplexeur 22 relié à un récepteur large bande 23 et à un module 24 de pilotage HUB HF.

Le site d'émission 1 et le site de réception 2 communiquent par l'intermédiaire d'un réseau de communication 25. En particulier, les deux modules de pilotage HUB de ces deux sites communiquent via ce réseau de communication pour échanger les commandes et les informations nécessaires au bon fonctionnement de la fonction HUB.

La mise en œuvre du procédé selon l'invention comporte une première phase optionnelle d'initialisation du système et une deuxième phase de mise en œuvre.

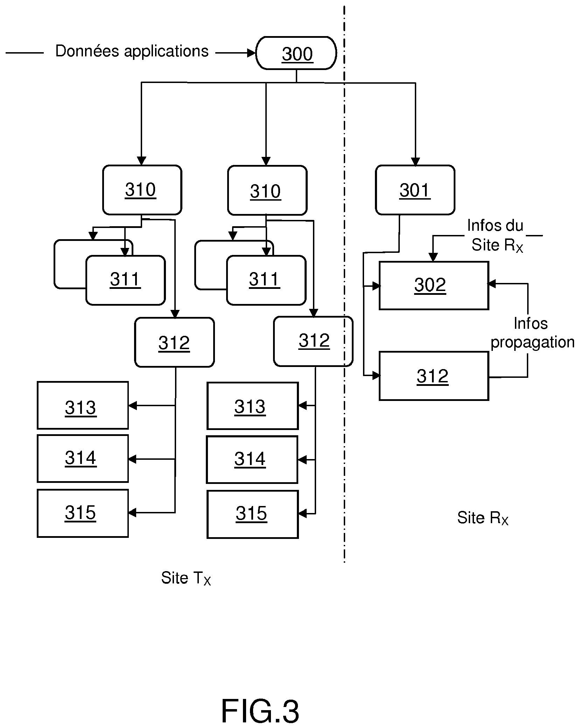

La figure 3 est un synoptique d'un exemple d'étapes pour l'initialisation du système et du procédé selon l'invention. Le procédé connaît les données de la mission ou de l'application, fréquences d'intérêts, formes d'ondes employées, clefs, secteurs des différentes missions.

Du côté émission de la station, le procédé initie le processus de gestion des ressources 301, par exemple en calculant tous les ΔT, 302, une configuration disponible pour chaque direction possible, en tenant compte par exemple des informations du site de réception ou bien à partir de données prévues par un opérateur en fonction d'une application visée. La valeur de la période ΔT est choisie, par exemple en fonction de l'application. Il peut aussi réaliser des calculs de prédiction de propagation pour les différentes missions, 303, ceci étant optionnel. Une ressource de calculs de propagation permet notamment d'affiner le champ des possibles au niveau des fréquences passantes, le besoin en puissance, etc. Ces informations peuvent être utilisées pour le calcul des configurations possibles.

Du côté réception, le procédé initialise les n antennes en écoute de la station réception, 310. Le capteur d'écoute lance autant de processus de veille que de fréquences d'intérêt qui lui sont allouées, 311. En parallèle, il peut aussi lancer un processus d'analyse de canal et à partir des résultats calculer un plancher de bruit, 312, un calcul d'occupation dans la bande de l'antenne de réception, 313, identifier des brouilleurs ou d'autres communications reçues sur l'antenne, 314.

A la fin de la phase d'initialisation, on dispose d'informations relatives aux fréquences possibles, aux puissances nécessaires pour une application ou une mission. En particulier, on peut avoir pour chaque mission un jeu par défaut de direction d'arrivée, de fréquences passantes, de puissances nécessaires pour établir une communication.

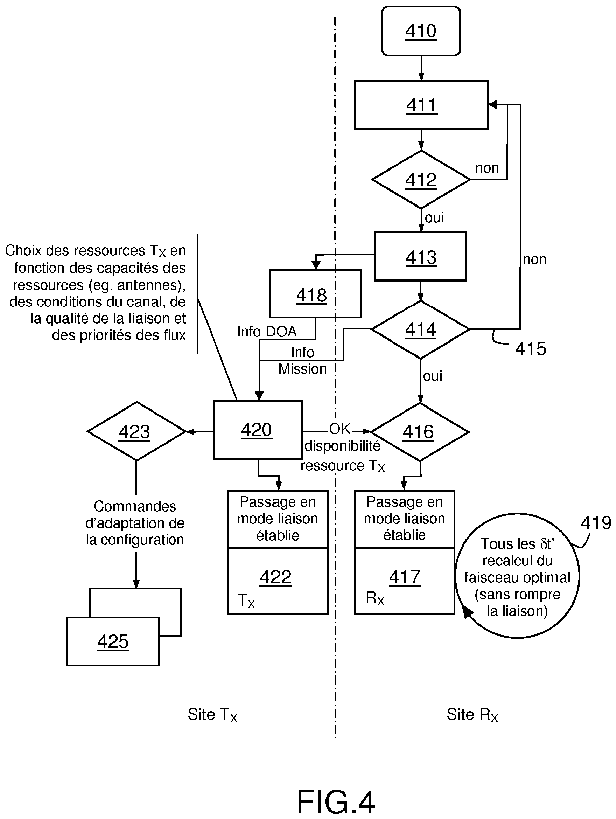

La figure 4 illustre un exemple de mise en œuvre du procédé selon l'invention.

Le module HUB du côté site de réception lance un processus de veille d'une fréquence d'intérêt fᵢₙₜ, 410i. Il effectue, 411, un calcul tous les δt de la corrélation des signaux reçus sur les n antennes de réception afin de déterminer l'énergie reçue, 412. La valeur de δt est choisie en fonction de l'application. S'il y a détection d'énergie, i.e., la valeur d'énergie est par exemple supérieure à une valeur seuil définie comme pour une demande de liaison (ALE), alors il y a formation de faisceau et veille ALE selon le protocole du demandeur ALE, 413. On notera que dans le cas où la communication est à fréquence fixe, la procédure est similaire avec une écoute faite directement sur la fréquence fixe. Le module de pilotage HUB vérifie si la demande de lien a été détectée dans un délai fixé (ou timer), 414. Si aucune demande de lien n'est arrivée dans le délai fixé, alors cette demande ne sera pas satisfaite 415 et le site de réception se remet dans une phase d'écoute et de scrutation ou scan des fréquences.

Dans le cas où une demande de lien est arrivée avant la fin du timer (dans le délai dédié), 416, le module de pilotage au niveau réception va vérifier s'il est possible d'établir un lien de communication. Pour cela, il va interroger le site d'émission afin de vérifier si ce dernier dispose des ressources nécessaires. S'il n'est pas possible d'établir un lien de communication, alors le site de réception retourne à l'étape de scrutation ou scan des fréquences. Si le lien peut être établi, le module HUB de réception va établir ce lien en tenant compte des informations transmises par le site d'émission. Ces informations contiennent, par exemple, une réponse sur la disponibilité des ressources d'émission pour la fréquence, la puissance et/ou la direction demandées. Le passage en mode liaison établie peut alors être fait et le processus de communication démarrer, 417.

En parallèle, le module de pilotage peut aussi calculer la direction d'arrivée du signal (DOA) et transmettre l'information au site d'émission, 418. Cette information pourra être utilisée pour déterminer la configuration disponible pour une direction donnée de manière plus précise. Le module de pilotage réception peut exécuter un recalcul tous les δt' du faisceau optimal sans rompre la liaison, 419 ; la valeur de δt' est choisie en fonction de l'application.

Du côté site d'émission 1, le module de pilotage HUB émission calcule tous les ΔT, 420, une configuration disponible pour chaque direction possible (en fonction des informations de mission, en fonction des liens en cours, en fonction de décisions opérateurs ...), si le site de réception lui a communiqué l'information de direction d'arrivée, il prendra aussi en compte cette information. Le calcul de la configuration fait appel à des méthodes ou procédés qui ne seront pas détaillés car ils sont connus de l'homme du métier. L'information de disponibilité ressource Tx 421, et les informations pour la configuration sont transmises au site de réception. Le site d'émission se met en processus de communication, 422. Régulièrement, au cours de la communication, le site d'émission peut vérifier, 423, s'il existe une configuration mieux adaptée pour répondre au besoin de liaison de communication et lorsqu'il existe une meilleure configuration, le site d'émission transmet une commande d'adaptation de la configuration 424 aux équipements de communications 425 ; le cas échéant, cela correspond soit à une modification du mode de fonctionnement des équipements utilisés pour la communication, soit à un changement partiel ou complet des équipements, par exemple changement d'antenne ou d'amplification de puissance.

Selon un mode de réalisation, le module de pilotage HUB côté site d'émission est adapté à collecter des renseignements sur les réalisations de chaînes d'émission/réception (processus de communications établis) au cours des missions pour réaliser des statistiques sur l'utilisation de certaines fréquences, puissance d'émission, bande de fréquence, etc., et définir ainsi le nombre d'équipements nécessaires au fil des mois, pour des périodes temporelles fixées, etc.

Selon une autre variante de réalisation, sur détection d'une liaison prioritaire, le niveau de priorité étant indiqué dans le signal reçu sur les antennes (par exemple au niveau d'une donnée ou d'un champ de données contenu dans la trame), le module pilotage côté émission pourra libérer des ressources utilisées par une communication en cours au profit de cette liaison prioritaire, mécanisme Tx. Il exécutera cette variante en utilisant un mécanisme de préemption connu de l'homme du métier, par exemple par une commande de libération vers le module HUB, une commande de « raccroché » vers le contrôleur de lien.

Sans sortir du cadre de l'invention, le module pilotage HUB au niveau réception pourrait, sur réception d'une deuxième demande de prise de liaison ALE, mettre en attente une première communication en cours, ceci sur une durée de temps tₐₜₜₑₙₜₑ choisie pour ne pas perturber la première liaison en cours, afin de transmettre au deuxième demandeur de la prise de liaison, un accusé réception Ack_{demande} de sa demande ALE et un message demandant de renouveler son appel ; par exemple, « votre appel ne peut aboutir, nous vous conseillons de renouveler votre demande plus tard ou de vous adresser à une autre station ».

Selon une autre variante de réalisation, le module de pilotage HUB au niveau réception peut discriminer plusieurs appels/communications sur une même fréquence avec la réception large bande sur réseau d'antennes. Il est alors possible de lancer plusieurs processus (n<nb antennes-1) de formation de faisceau sur chaque fréquence veillée.

Le système peut aussi comporter un système central adapté à recevoir de la part des sites d'émission des informations relatives à des demandes de communication que ces sites d'émissions ne peuvent prendre en compte du fait d'un nombre trop important de demandes. Dans ce cas, le système central est capable de sélectionner un autre site d'émission pour satisfaire à une demande de communication. Par exemple, il pourra solliciter un ou plusieurs des autres sites d'émission qu'il pilote pour leur demander quelle est leur capacité à prendre en charge ces demandes de communications ne pouvant être traitées par le premier système, et il attribuera la ou les communications aux sites d'émissions en mesure de les réaliser.

Le système et le procédé qui viennent d'être décrits sont utilisés sur des infrastructures fixes déjà existantes ou peuvent être mis en œuvre dans des infrastructures de dimensions raisonnables, plus mobiles, déployables facilement en fonction des besoins d'une mission donnée.

Le procédé et le système selon l'invention permettent notamment de fédérer les moyens radioélectriques d'un ou de plusieurs centres radios et de les allouer dynamiquement aux utilisateurs locaux ou distants en fonction des services requis.

Cette allocation dynamique optimise le coût d'acquisition et d'exploitation du réseau car le nombre de radios nécessaires est calculé en fonction de la capacité globale demandée au réseau radio et non du nombre d'utilisateurs. Ce système peut intégrer des équipements hétérogènes et permet donc de s'affranchir de toute dépendance vis-à-vis des fournisseurs de radios.

## Revendications

1. Procédé d'établissement d'un lien de communication pour un utilisateur mobile dans un système de communication haute fréquence HF comprenant au moins un site d'émission (1) et au moins un site de réception (2), les deux sites étant distants l'un de l'autre d'une distance D et communiquant via un réseau de communication (25) comportant au moins les étapes suivantes :
• Au niveau du site de réception (2), scruter les signaux ou fréquences d'intérêt fᵢₙₜ (410i) pour une communication donnée en utilisant un récepteur large bande (23) configuré pour une bande d'écoute strictement supérieure à la bande instantanée du signal modulé maximal possible, estimer le niveau d'énergie reçue sur les fréquences scrutées (412) par un calcul de corrélation des signaux reçus et détecter si les signaux reçus sur ledit récepteur large bande comporte une demande d'établissement d'un lien de communication entre l'utilisateur mobile et le système de communication,
• Lorsque le signal comporte une requête d'établissement de lien de communication, alors transmettre cette demande d'établissement de lien au niveau d'un équipement émetteur et à un module de pilotage HUB (17) qui vérifie si la requête en communication a été détectée dans un délai fixé (414),
• Lorsque la requête n'est pas reçue dans le délai fixé, alors le site de réception se met dans une phase d'écoute et de scrutation,
• Lorsque la requête est arrivée dans le délai fixé, (416), le module de pilotage au niveau réception vérifie s'il est possible d'établir un lien de communication en interrogeant le site d'émission et en vérifiant que le site d'émission dispose des ressources pour établir le lien de communication demandé et démarrer le procédé de communication (417) sur la base d'informations de configuration calculées par le site d'émission, dans le cas contraire retourner à l'étape de scrutation des signaux reçus.

2. Procédé selon la revendication 1 **caractérisé en ce que** pour une demande en fréquence fixe FF l'appel est réalisé sur une même fréquence.

3. Procédé selon la revendication 1 **caractérisé en ce que** pour une demande pour l'établissement d'un lien automatique ALE, l'appel est réalisé successivement ou en parallèle sur plusieurs fréquences de valeurs différentes.

4. Procédé selon la revendication 1 **caractérisé en ce que** l'on calcule la direction d'arrivée du signal (418) et on transmet cette information au site d'émission (1) pour déterminer la configuration d'émission disponible pour une configuration donnée.

5. Procédé selon l'une des revendications 1 ou 4 **caractérisé en ce qu'**il comporte une étape où l'on compare la configuration calculée avec un ensemble de configurations existantes et, dans le cas où une meilleure configuration existe, alors le module de pilotage HUB transmet les nouveaux paramètres de configuration pour le ou les processus de communication aux équipements pilotés (amplificateur, matrice, ...).

6. Procédé selon l'une des revendications 1 à 5 **caractérisé en ce qu'**il analyse le contenu de la demande de communication et en fonction de la priorité de la communication, il libère des ressources utilisées par une communication en cours pour les réaffecter à cette nouvelle communication.

7. Procédé selon l'une des revendications 1 à 5 **caractérisé en ce que** sur réception d'une demande de communication, le procédé suspens une communication en cours pour transmettre une information d'attente à la nouvelle communication.

8. Système de communication haute fréquence comportant au moins un site d'émission (1) et un site de réception (2), les deux sites étant séparés d'une distance D choisie pour éviter les perturbations du site d'émission sur le site de réception **caractérisé en ce que** :
• Le site d'émission (1) comprend au moins plusieurs émetteurs (14i) reliés à un ensemble d'antennes émettrices (16j), un module de pilotage haute fréquence (17),
• Le site de réception (2) comporte un récepteur large bande (23) et un module (24) de pilotage HF,
• Lesdits modules de pilotage haute fréquence au niveau du site d'émission et au niveau du site de réception sont adaptés à exécuter les étapes du procédé selon l'une des revendications 1 à 7.

## Patentansprüche

1. Verfahren zum Aufbauen einer Kommunikationsverbindung für einen mobilen Benutzer in einem Hochfrequenz-(HF)-Kommunikationssystem, das mindestens einen Sendeort (1) und mindestens einen Empfangsort (2) umfasst, wobei die beiden Orte um eine Entfernung D voneinander entfernt sind und über ein Kommunikationsnetz (25) kommunizieren, das mindestens die folgenden Schritte umfasst:
• Prüfen, am Empfangsort (2), der Signale oder Frequenzen von Interesse fᵢₙₜ (410i) für eine gegebene Kommunikation mittels eines Breitbandempfängers (23), der für ein Hörband konfiguriert ist, das strikt höher ist als das Momentanband des maximal möglichen modulierten Signals, Schätzen des auf den geprüften Frequenzen (412) empfangenen Energiepegels durch eine Korrelationsberechnung der empfangenen Signale und Feststellen, ob die auf dem Breitbandempfänger empfangenen Signale eine Anforderung zum Aufbauen einer Kommunikationsverbindung zwischen dem mobilen Benutzer und dem Kommunikationssystem einschließen,
• Übertragen, wenn das Signal eine Kommunikationsverbindungs-Aufbauanforderung enthält, dieser Verbindungsaufbauanforderung auf der Ebene eines Sendegeräts und an ein HUB-Steuermodul (17), das verifiziert, ob die Kommunikationsanforderung innerhalb einer festgelegten Frist (414) erkannt wurde,
• Übergehen, durch die Empfangs stelle, wenn die Anforderung nicht innerhalb der festgelegten Frist empfangen wird, in eine Abhör- und Prüfphase,
• Verifizieren, durch das Steuermodul am Empfangsort, wenn die Anforderung innerhalb der festgelegten Frist (416) angekommen ist, ob es möglich ist, eine Kommunikationsverbindung aufzubauen, durch Abfragen des Sendeorts und durch Verifizieren, dass der Sendeort über die Ressourcen zum Aufbauen der angeforderten Kommunikationsverbindung und zum Starten des Kommunikationsverfahrens (417) verfügt, auf der Basis der vom Sendeort berechneten Konfigurationsinformationen, andernfalls Zurückkehren zum Schritt des Prüfens der empfangenen Signale.

2. Verfahren nach Anspruch 1, **dadurch gekennzeichnet, dass** für eine Festfrequenzanforderung FF der Anruf auf einer gleichen Frequenz erfolgt.

3. Verfahren nach Anspruch 1, **dadurch gekennzeichnet, dass** für eine Anforderung zum Aufbauen einer automatischen ALE-Verbindung der Anruf nacheinander oder parallel auf mehreren Frequenzen mit unterschiedlichen Werten erfolgt.

4. Verfahren nach Anspruch 1, **dadurch gekennzeichnet, dass** die Ankunftsrichtung des Signals (418) berechnet und diese Information an den Sendeort (1) übertragen wird, um die verfügbare Sendekonfiguration für eine gegebene Konfiguration zu bestimmen.

5. Verfahren nach einem der Ansprüche 1 oder 4, **dadurch gekennzeichnet, dass** es einen Schritt umfasst, bei dem die berechnete Konfiguration mit einem Satz vorhandener Konfigurationen verglichen wird und, falls eine bessere Konfiguration vorhanden ist, das HUB-Steuermodul die neuen Konfigurationsparameter für das/die Kommunikationsverfahren an die gesteuerten Geräte (Verstärker, Matrix,...) überträgt.

6. Verfahren nach einem der Ansprüche 1 bis 5, **dadurch gekennzeichnet, dass** es den Inhalt der Kommunikationsanforderung analysiert und in Abhängigkeit von der Priorität der Kommunikation Ressourcen freisetzt, die von einer laufenden Kommunikation verwendet werden, um sie dieser neuen Kommunikation zuzuweisen.

7. Verfahren nach einem der Ansprüche 1 bis 5, **dadurch gekennzeichnet, dass** das Verfahren bei Erhalt einer Kommunikationsanforderung eine laufende Kommunikation unterbricht, um eine Warteinformation an die neue Kommunikation zu übertragen.

8. Hochfrequenzkommunikationssystem das mindestens einen Sendeort (1) und einen Empfangsort (2) umfasst, wobei die beiden Orte um eine Entfernung D getrennt sind, die so gewählt wurde, dass die Störungen des Sendeorts am Empfangsort vermieden werden, **dadurch gekennzeichnet, dass**:
• der Sendeort (1) mindestens mehrere mit einem Satz von Sendeantennen (16j) verbundene Sender (14i), ein Hochfrequenzsteuermodul (17) umfasst,
• der Empfangsort (2) einen Breitbandempfänger (23) und ein HF-Steuermodul (24) umfasst,
• die Hochfrequenz-Steuermodule am Sendeort und am Empfangsort zum Ausführen der Schritte des Verfahrens nach einem der Ansprüche 1 bis 7 ausgelegt sind.

## Claims

1. Method for establishing a communication link for a mobile user in a high frequency HF communication system comprising at least one transmission site (1) and at least one reception site (2), the two sites being remote from one another by a distance D and communicating via a communication network (25), comprising at least the following steps:
• at the reception site (2), scanning the signals or frequencies of interest fᵢₙₜ (410i) for a given communication using a wideband receiver (23) configured for a listening band which is strictly broader than the instantaneous band of the maximum modulated signal possible, estimating the level of energy received on the scanned frequencies (412) by a correlation computation of the received signals and detecting whether the signals received on said wide band receiver comprises a request to establish a communication link between the mobile user and the communication system,
• when the signal comprises a request to establish a communication link, then transmitting this request to establish a link at the level of a transmitting equipment and to a control module HUB (17) which checks whether the communication request has been detected within a fixed period (414),
• when the request is not received within the fixed period, then the reception site goes into a listening and polling phase,
• when the request has arrived within the fixed period, (416), the control module at the reception level checks whether it is possible to establish a communication link by querying the transmission site and checking that the transmission site has the resources for establishing the requested communication link and starting the communication process (417) based on configuration information computed by the transmission site, otherwise returning to the step of scanning the received signals.

2. Method according to claim 1, **characterized in that**, for a fixed frequency FF request, the call is carried out on a same frequency.

3. Method according to claim 1, **characterized in that**, for an automatic link establishment (ALE) request, the call is carried out successively or in parallel on several frequencies of different values.

4. Method according to claim 1, **characterized in that** the direction of arrival of the signal (418) is computed and this information is transmitted to the transmission site (1) to determine the transmission configuration available for a given configuration.

5. Method according to one of claims 1 or 4, **characterized in that** it comprises a step in which the computed configuration is compared with a set of existing configurations and, if a better configuration exists, then the HUB module transmits the new configuration parameters for the communication process or processes to the driven equipment items (amplifier, matrix, etc.).

6. Method according to one of claims 1 to 5, **characterized in that** it analyses the content of the communication request and, depending on the priority of the communication, it frees up resources used by a current communication to reassign them to this new communication.

7. Method according to one of claims 1 to 5, **characterized in that**, on reception of a communication request, the method suspends a current communication to transmit a wait indication to the new communication.

8. High frequency communication system comprising at least one transmission site (1) and one reception site (2), the two sites being separated by a distance D chosen to avoid the disturbances from the transmission site on the reception site, **characterized in that**:
• the transmission site (1) comprises at least several transmitters (14i) linked to a set of transmitting antennas (16j), a high frequency control module (17),
• the reception site (2) comprises a wide band receiver (23) and an HF control module (24),
• said high frequency control modules at the transmission site and at the reception site are adapted to execute the steps of the method according to one of claims 1 to 7.
